## Europäisches Patentamt

## European Patent Office

## Office européen des brevets

(19)

(11) Publication number: **0 015 701**
**B1**

# EUROPEAN PATENT SPECIFICATION

(45) Date of publication of patent specification: **12.01.83**

(21) Application number: **80300559.4**

(22) Date of filing: **26.02.80**

(51) Int. Cl.³: **C 08 J 7/04, C 09 D 3/76, C 08 L 27/08, B 32 B 27/30**

(54) **Heat sealable packaging film of a polyacrylonitrile substrate coated with a vinylidene chloride copolymer.**

(30) Priority: **05.03.79 US 17676**

(43) Date of publication of application:
**17.09.80 Bulletin 80/19**

(45) Publication of the grant of the patent:
**12.01.83 Bulletin 83/2**

(84) Designated Contracting States:
**BE DE FR GB IT NL**

(56) References cited:
**DE - A - 2 240 040**
**US - A - 3 532 535**

(73) Proprietor: **MOBIL OIL CORPORATION**
**150 East 42nd Street**
**New York New York 10017 (US)**

(72) Inventor: **Arbit, Harold Abraham**
**35 North 6th Avenue**
**Highland Park New Jersey 08904 (US)**

(74) Representative: **Cooper, John Anthony**
**Mobil Court 3 Clements Inn**
**London WC2A 2EB (GB)**

Courier Press, Leamington Spa, England.

### Heat sealable packaging film of a polyacrylonitrile substrate coated with a vinylidene chloride copolymer

The present invention is concerned with oriented polyacrylonitrile films which have been coated on one or both sides with a vinylidene chloride copolymer coating compositions.

In the past, thermoplastic and thermoset packaging films such as polyolefin films including polyethylene and polypropylene and polybutene and their copolymers; polyester films such as polyethylene terephthalate have been coated with a variety of coating compositions including vinylidene chloride copolymer to improve their heat sealability as well as their resistance to oxygen and moisture vapor penetration. In the past, when such film materials coated with latexes containing high concentrations of vinylidene chloride were sealed and exposed to high moisture concentrations for example, by immersion in water at room temperature or above, there was a tendency of the seal to fail by delamination of the coating from the film substrate. This is particularly true in the case of polyvinylidene chloride coated polyacrylonitrile films. Coated film structures of this kind have been described for example in U.S. Patent Nos. 3,617,368 and 4,058,649.

In general, vinylidene chloride polymer coating systems which have been used in the past comprise latexes which are applied to the film substrate from an aqueous medium. A latex, by definition, is a dispersion of spherical, polymeric particles in a range from 0.01 up to 1.0 $\mu$m (0.004—0.04 mils) diameter in water. Latex coating systems employed for coating applications to film substrates generally consist of from about 50% to about 60% solids with about 2% to 3% of the solids being conventional, wetting and suspending agents. On drying the applied coating, the water evaporates and the particles fuse together at their contacting surface.

The present invention provides a coated film structure including an oriented polyacrylonitrile film substrate, at least one surface of which is coated with a vinylidene chloride copolymer containing a predominant amount of vinylidene chloride, the copolymer having been applied as a latex having, characterised in that the latex has a pH from 0.90 to 0.95. The oriented polyacrylonitrile film may be corona discharge treated prior to coating.

The oriented polyacrylonitrile film is preferably a biaxially oriented film prepared by casting a film from a solution of polyacrylonitrile and biaxially stretching it, using known techniques. One such procedure is described in U.S. Patent No. 3,437,717. A particularly preferred technique is described in U.S. Patent No. 4,066,731.

The vinylidene chloride copolymer preferably comprises a copolymer of vinylidene chloride and at least one of acrylonitrile; alkyl acrylates, especially methyl, ethyl, butyl, isobutyl and octyl acrylates; and monoethylenically unsaturated acids, especially methacrylic acid and mixtures of methacrylic and acrylic acids.

Briefly, this technique involves pouring a hot, concentrated solution of polyacrylonitrile in a solvent that is water-soluble, e.g., dimethyl sulfoxide, onto a film supporting surface and stripping the resulting film from said surface. The resulting film containing solvent is subjected to contact with water, preferably under constrained conditions, thereby removing the solvent from the film and replacing it with water. The film composed essentially of acrylonitrile and water is then stretched to about 1.5 to about 4 times its original dimension in both the machine direction and the transverse direction. A suitable method is by use of the drafter-tenter frame arrangement (see U.S. Patent No. 3,437,737). While still under restrained conditions, the film is dried, thus producing biaxially oriented polyacrylonitrile film. Such film is available commercially.

Preferably, the biaxially oriented film is prepared from polyacrylonitrile homopolymer. It is possible, however, to use films made from copolymers of acrylonitrile with other ethylenically unsaturated monomers, such as alkyl acrylates. Film thickness may suitably be between 6 and 150 $\mu$m (0.25 and 4 mils).

The oriented polyacrylonitrile films of the present invention are coated with vinylidene chloride copolymer coatings containing a predominant amount of vinylidene chloride in the polymer structure. Such coatings serve to enhance the heat seal characteristics by increasing the heat seal temperature range and additionally, they provide barrier characteristics to the film so that the film's resistance to the transmission of oxygen and water vapor is increased. These latter characteristics are important, particularly in packaging applications whereby the sealed film package may be exposed to conditions of relatively high humidity and in some instance the sealed film containing product may be actually immersed in water including boiling water for cooking the commodity contained in the sealed film package. Obviously there are less severe conditions of exposure to moisture such as when such coated film products are used to contain moisture emitting comestibles including such products as fresh meat and produce.

It has been found, as more fully discussed hereinafter, that particular packaging films such as for example polyethylene terephthalate which have been coated with polyvinylidene chloride (PVDC) coating materials exhibit excellent resistance to coating adhesion failure when immersed in liquids including water at room temperature and above and to the boiling point of water. However, oriented polyacrylonitrile films which have a surface coated with polyvinylidene chloride coating materials for example, the Saran coatings (Saran is a Trade Mark) identified by their manufacturer as SL-112, delaminate causing seal failure when the coated substrates are immersed in water for periods of time at room temperature or are immersed in boiling water for shorter periods.

Normally, the vinylidene chloride polymer latexes supplied from the manufacturer have a pH which is acidic, e.g., on the order of 1.5 to 2.0 for example. It has been normal practice in the prior art to adjust such an acidic pH upwardly to an alkaline condition for example pH=9.0.

It has now been found, however, that when the pH of the latex which is to be employed for topcoating oriented polyacrylonitrile films is adjusted downwardly, i.e., to 0.95 and below, excellent resistance to coating delamination, when the coated films are immersed in water, is obtained. If the pH of the latex is adjusted below 0.90, adhesion of the coating to the polyacrylonitrile base film begins to deteriorate.

The following Table I illustrates coating adhesion variations when vinylidene chloride polymers are coated onto the surface of films such as polyacrylonitrile and compared to vinylidene chloride polymer coated upon the surface of polyester, specifically, polyethylene terephthalate. The coating composition, referred to in Table I, comprises a copolymer of 80—85% by weight of vinylidene chloride; 15—20% by weight comprising acrylonitrile, methyl methacrylate, and methacrylic acid and 1.8% sodium sulfoethyl methacrylate.

In the tests reported in Table I an adhesive coated regenerated cellulose film ("Cellophane" — Trade Mark) is employed to test the adhesion of the latex coating to the film. In the testing procedure the coated film is cross-hatched with a sharp edged instrument by making three parallel lines approximately 6 mm apart and approximately 25 mm long intersected at 90° with three additional lines similarly spaced. A strip of adhesive coated film approximately 75 mm long is pressed diagonally across the scribed squares. The tape should be pressed down firmly with the finger. The tape is then removed from the film. The removal of the tape should be a peeling back rather than a direct lifting motion, that is the angle of pull should be approximately 150° rather than 90°. The tape should be removed with a quick pull. Adhesion is rated on the basis of how much of the coating in the scribed squares is removed. No coating removal is rated 10 (No Peel) as being perfect and complete removal of the coating is rated 0 (Total Separation) as being complete failure.

TABLE I
Dry vs wet adhesion of PVDC coated films

| Exposure | PVDC coated[1] polyacrylonitrile film (16 micron) | PVDC coated[1] polyethylene terephthalate film (12 micron) |
|---|---|---|
| Air at room temperature | No peel | No peel |
| Water at room temperature for 16 hours | Coating peels | No peel |
| Water at 100°C for one hour | Total separation of coating from base film | No peel |

[1]=Dow Saran SL-112 coating ("Dow" and "Saran" are Trade Marks) coating rate: 1.6 g.m.$^{-2}$.

As can be seen from Table I the problems of coating adhesion on the surface of electronically treated polyacrylonitrile film are quite severe when contrasted with those of polyethylene terephthalate. The PVDC coating latex employed in the tests reported in Table I had a pH as received from the manufacturer of about 1.5. Attempts to overcome the coating adhesion loss on the polyacrylonitrile following the water exposure by predrying the film or by coating with the PVDC on both sides were unsuccessful.

However, it was found that adjustment of the pH of the PVDC latex prior to coating by dilution with dilute hydrochloric acid, prevented delamination as shown in the following Table II.

TABLE II
Effect of latex pH upon coating adhesion to polyacrylonitrile

| Latex pH | Coating — base film after water immersion at room temperature for 16 hours | Coating — base film after exposure to boiling water for 1/2 hour |
|---|---|---|
| 0.9 | No peel | No peel |
| 1.5 | Total separation | Total separation |
| 4.0 | Total separation | Total separation |
| 9.0 | Total separation | Total separation |

3

**0 015 701**

It will be apparent from Table II that the adhesion of vinylidene chloride copolymers to polyacrylonitrile base films during exposure of the laminate to immersion in water, is definitely improved by maintaining the pH of the latex below 1.0.

**Claims**

1. A coating film structure including an oriented polyacrylonitrile film substrate, at least one surface of which is coated with a vinylidene chloride copolymer containing a predominant amount of vinylidene chloride, the copolymer having been applied as a latex, characterised in that the latex has a pH from 0.90 to 0.95.

2. A coating film structure in accordance with Claim 1 in which the copolymer comprises vinylidene chloride copolymerized with at least one of the following comonomers: acrylonitrile; an alkyl acrylate or a monoethylenically unsaturated acid.

3. A coating film structure in accordance with Claim 2 in which the alkyl acrylate is methyl, ethyl, butyl, isobutyl or octyl acrylate.

4. A coated film structure in accordance with Claim 2 or 3 in which the unsaturated acid is methacrylic acid or a mixture of methacrylic acid and acrylic acid.

5. A coated film structure in accordance with any of Claims 1 to 4 in which the polyacrylonitrile film substrate is biaxially oriented.

**Patentansprüche**

1. Eine beschichtete Folienstruktur, die ein orientiertes Polyacrylnitril-Folien-Substrat umfaßt, von dem mindestens eine Oberfläche mit einem Vinylidenchlorid-Copolymeren beschichtet ist, das eine überwiegende Menge an Vinylidenchlorid enthält, wobei das Copolymere als ein Latex aufgebracht wurde, dadurch gekennzeichnet, daß der Latex einen pH von 0,90 bis 0,95 aufweist.

3. Eine beschichtete Folienstruktur gemäß Anspruch 1, bei der das Copolymere Vinylidenchlorid enthält, das mit mindestens einem der folgenden Comonomeren copolymerisiert ist: Acrylnitril; einem Alkylacrylat oder einer monoethylenisch ungesättigten Säure.

3. Eine beschichtete Folienstruktur gemäß Anspruch 2, in der das Alkylacrylat Methyl-, Ethyl-, Butyl-, Isobutyl- oder Octyl-Acrylat ist.

4. Eine beschichtete Folienstruktur gemäß Anspruch 2 oder 3, in der die ungesättigte Säure Methacrylsäure oder eine Mischung aus Methacrylsäure und Acrylsäure ist.

5. Eine beschichtete Folienstruktur nach einem der Ansprüche 1 bis 4, in der das Polyacrylnitril-Folien-Substrat biaxial orientiert ist.

**Revendications**

1. Structure de film revêtu comprenant un substrat de film de polyacrylonitrile orienté, dont au moins l'une des surfaces est enduite avec un copolymère de chlorure de vinylidène contenant essentiellement di chlorure de vinylidène, le copolymère étant appliqué sous forme d'un latex, caractérisé en ce que le latex a un pH de 0,90 à 0,95.

2. Structure de film revêtu selon la revendication 1, caractérisée en ce que le copolymère comprend du chlorure de vinylidène copolymérisé avec au moins l'un des comonomères suivants: de l'acrylonitrile, un acrylate d'alkyle ou un acide à insaturation monoéthylénique.

3. Structure de film revêtu selon la revendication 2, caractérisée en ce que l'acrylate d'alkyle est un acrylate de méthyle, d'éthyle, de butyle, d'isobutyle ou d'octyle.

4. Structure de film revêtu selon l'une des revendications 2 et 3, caractérisée en ce que que l'acide insaturé est l'acide méthacrylique ou un mélange d'acide méthacrylique et d'acide acrylique.

5. Structure de film revêtu selon l'une quelconque des revendications 1 à 4, caractérisée en ce que le substrat de film de polyacrylonitrile est orienté biaxialement.

4